# EUROPEAN PATENT SPECIFICATION

(11) **EP 4 289 021 B1**
(45) Date of publication and mention of the grant of the patent: **23.04.2025**
(21) Application number: 22707474.7
(22) Date of filing: 02.02.2022
(51) Int. Cl.: H01M 50/211, H01M 50/224, H01M 50/242, H01M 50/249, H01M 50/262, H01M 50/502, H01M 50/55, H01M 50/552

(54) **SPACE-OPTIMIZED STRUCTURE OF A BATTERY MODULE**
RAUMOPTIMIERTE STRUKTUR EINES BATTERIEMODULS
STRUCTURE SPATIALEMENT OPTIMISÉE D'UN MODULE DE BATTERIE

(30) Priority: 03.02.2021 FI 20215112
(43) Date of publication of application: 13.12.2023
(73) Proprietor: Aurora Powertrains Oy, 96100 Rovaniemi (FI)
(72) Inventor: HAAVIKKO, Olli, 97220 Sinettä (FI); NISKANEN, Jori-Jaakko, 96190 Rovaniemi (FI); AUTIONIEMI, Matti, 96100 Rovaniemi (FI)
(74) Representative: Berggren Oy
(86) International application number: PCT/FI2022/050063
(87) International publication number: WO 2022/167724

(56) References cited:
- US-B2- 10 734 617
- US-B2- 9 385 355

## Description

### Technical field

The present invention relates to battery technology, and packing principles of batteries linked also to their physical structure. Secondarily, the present invention relates to various applications, where the presented battery module can be used; such as electric cars, other electrically driven vehicles, and rechargeable electric energy storage systems.

### Background

Limited space is a very basic and common problem or at least a restrictive condition, when designing batteries and battery assemblies for a variety of usages. Especially for electrically driven vehicles, such as electric cars, this problem is a crucial boundary condition in the whole design process. The same problem relates to all situations where the battery assembly needs to be fit in a given shaped housing (e.g. in volumes determined by non-planar walls) or in a very limited space within the housing of the device. The required battery assemblies may need to have a relatively large size compared to a volume of the whole vehicle or of the other type of housing in order to ensure enough battery capacity and power, and therefore, the energy density is usually desired to be maximized for the battery assembly in view of the used volume. In other words, spare volume or volumes with no functional effects within the whole battery assembly are desired to be minimized.

Pouch cells have been known since 1995. They comprise conductive foil tabs welded to respective electrodes, sealed in a pouch structure where the positive and negative terminals are carried outside of the pouch. The electrodes can be separated by e.g. insulating foils, and the electrodes can be pressed in a compact manner in a roll-form or in a stack-form to the relatively thin pouch. The basic form of a pouch cell is rather thin, planar piece of plate, where the positive and negative terminals are extruded from one thin edge of the pouch cell, or possibly from opposite edges.

In prior art, battery assemblies can be determined to comprise battery modules, where each battery module comprises a group of battery elements.

A second problem in pouch cell typed battery assemblies is to ensure proper connections between groups of terminals and also create a battery structure which remains solid, intact and properly working under external forces which can be quite high in vehicular use situations.

In prior art, there have been presented certain mechanical means to connect respective terminals of the two adjacent pouch cell elements with a metal plate. "An assembly process for A123 20Ah battery pack", presented in https://www.youtube.com/watch?v=O3VtYwJz78g, shows this structure, where two pouch cells with extruded planar terminal pieces can be entered through holes of an insulating end plate, and the terminal pieces can be bent 90 degrees onto the insulating end plate, where an added metallic piece can be screwed on top of the bent sections, ensuring good electric connection between the two terminals of the adjacent pouch cells. For the same battery pack, WWW-page https://visforvolt-age.org/forum/13591-vectrix-lithium-conversion-a123-20ah-packs shows a con necting principle between insulating end pieces, which have screw holes for connecting the desired terminals with a metallic piece. The longitudinal insulating end pieces can be connected together a bit like a jigsaw puzzle's pieces.

The battery manufacturer EIG has presented a cassette-like pouch cell arrangement, see WWW-page http://boekel.nu/foto/11/2012-03-17 eig battery module/in-dex.htm. The EIG structure comprises a plastics-made frame-type of structure which is the black piece of material in Fig. 10 of the image gallery. As e.g. Fig. 9 shows, the electrode connections can be seen as metallic end tabs where a part of the tab has been bent 90 degrees on top of a black frame section. The frame-type of a housing is open mostly on the larger planar surface of the pouch cell. Electrode connections are accessible externally. EIG also presents an "angled" connecting piece, see https://endless-spere.com/forums/viewtopic.php?t=90740, where adjacent battery elements can be serially connected to form a larger battery module. There are actually two sets of serially connected batteries if a connecting piece of EIG is applied, like shown in the referred figures.

Cassette-based solutions have a drawback, where the energy density will decrease because the usually plastics-made cassette material will take room from the effective battery volume (where the chemical reactions will occur). Furthermore, ultrasonic welding would not be possible in the battery terminal connections between adjacent battery cells.

In another piece of prior art, a blog by Formula SAE team, see http://built-bybrock.blogspot.com/2014/01/fsae-batteries.html, they have a battery structure where a large plate (yellow one in the WWW-page) with holes is placed on top of the pouch cells, and longer bars are making the connections between the electrodes possible along the longest dimension of the box. In the orthogonal end surfaces, there are two support structures shaped as dual rhombus-shaped elements, while the opposite support structures are connected by four direct rods per a module. Thus, the battery structure becomes tightly connected.

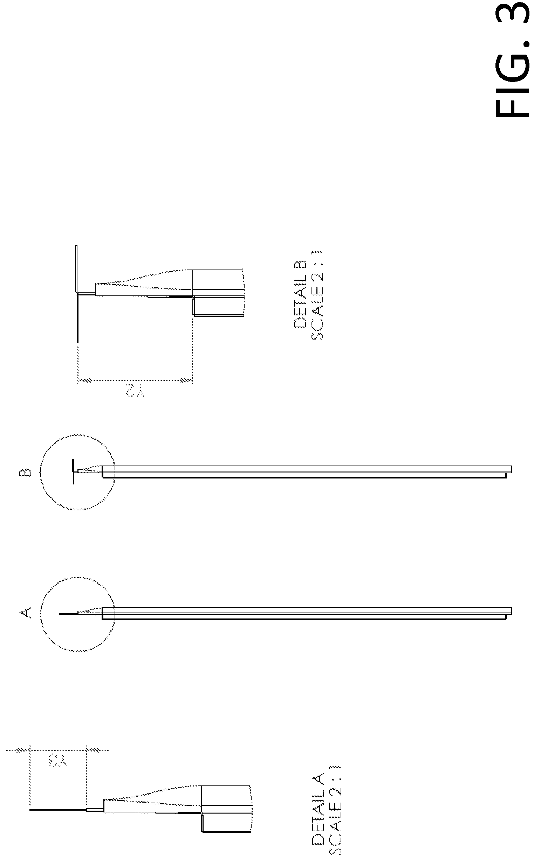

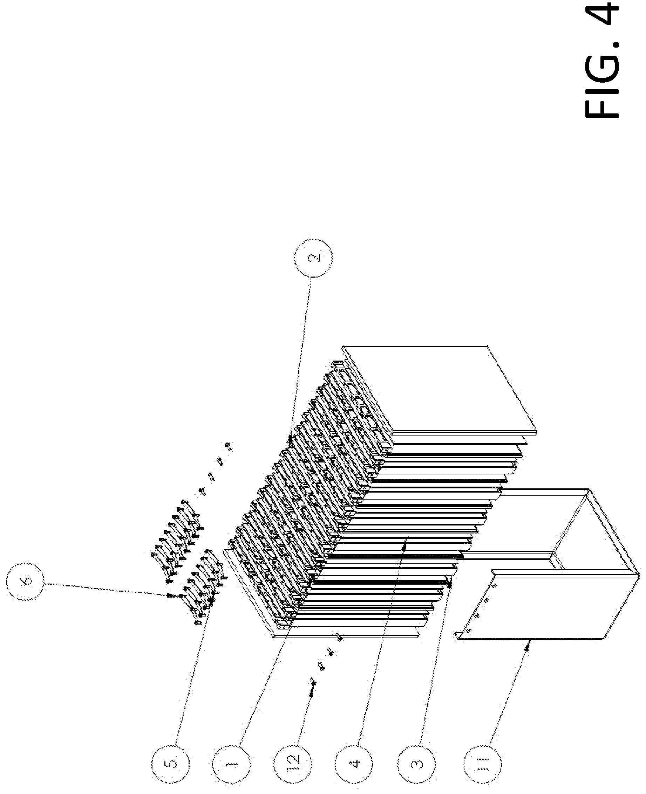

Among patent application and utility model publications, CN 203521512 U discloses a battery module structure where lower and upper fixing blocks 41, 42 are applied (see Figure 4). Figure 3 also shows a connection structure for the battery module's electrodes, where two similar connecting pieces 32 are placed "around" an insulating piece 31 during the assembly of the arrangement.

CN 109301125 discloses a battery module structure of electric forklift and battery pack. There is an insulating fixing frame 5 comprising a first card row 51 and a second car row 52 where this fork-shaped fixing frame 5 is arranged to fix the electrodes together, see the arrangement on top of the pouch cells in Fig. 4.

US 10,734,617 ("Sakai") discloses a battery module structure and assembly method for a group of pouch cells. Especially Figures 10-13 illustrate the assembly method, where a holed plate (i.e. cover 40) is applied on top of the batteries' side, where the terminal ends are extruded. Tabs 51 are inserted thereafter which are plate-like connection members for electrically connecting the positive and/or the negative leads. After connecting the tabs 51, the extruded parts can be bent 90 degrees to align with the cover's surface direction. This connection arrangement is applied at a module level. The resulting product is a highly vibration-resistant battery module for e.g. vehicular use.

One solution in binding the battery cells together is to use a jelly-type of filling material between the pouch cells. This application works so that appropriate liquid material is filled in the battery module to all air spaces (i.e. air gaps) around and between the battery cells; when the liquid solidifies, it will result in a jelly-type of material acting as a binder between the battery cells. This method has problems when concerning maintainability of the battery module, as it is truly troublesome to remove the battery cells from one another after the jelly has been solidified. Another problem is that it is hard to add the liquid substance to all open gaps (i.e. volumetric areas) of the structure in an uniform manner because the interior of the battery module may include complex shapes; thus, the resulting battery module may not be uniform resulting in quality variance across the structure.

As highlighted by the above prior art, a main problem in battery modules designed for vehicular use, is the tolerability for high vibration levels i.e. high forces. Another problem arising from small available spaces in the vehicles is the need to design a battery with optimal i.e. high energy density. This leads into a requirement where excessive volumes outside the actual functional physical parts of the battery are desired to be minimized. The connections between adjacent pouch cells need some excessive space, and the wirings, (current) rails and other electronics designed for e.g. measurements as well, and also the possible outflowing gases need some space within the battery module. However, the desire is to minimize the ratio of such spaces in view of the whole volume of the battery module.

While the prior art shows some structures of different connection arrangements between the pouch cell -typed battery elements, there is still room to show a scalable battery module, which is especially efficient concerning energy density and which is applicable especially in various vehicular uses, such as in electric cars and electric (motor driven) sleds, i.e. electric snowmobiles, and in rechargeable electric energy storage systems.

### Summary

The present invention introduces a battery module comprising battery cells, where the energy density within the battery module is maximized in view of the used volume. The maximization or at least optimization of the energy density is made possible by minimizing the space outside the actual pouched electrodes by bending terminal tabs in a desired way, and applying an excess part i.e. a fastening portion adjacent to the edge of the pouch cell where at least one terminal tab of the pouch cell locates. The fastening portions will rigidify the internal structure of the battery module by ensuring easier connections between battery terminals in a desired way. The fastening portion or at least its outer surface is made from electrically insulating material.

In other words, the present invention discloses, in its first aspect, a battery module, comprising:
- a plurality of battery cells, which are in a form of pouch cells, and which are stacked and/or piled next to each other in a horizontal direction;
- each battery cell comprising a positive terminal tab (7) and a negative terminal tab (8) extruding from opposite edges of the battery cell, or from a same edge of the battery cell.

The battery module is characterized in that the battery module further comprises:
- a fastening portion (1) per one battery cell, which fastening portion (1) is a longitudinally shaped element, and where the fastening portion (1) is placed along the edge of the battery cell where the positive or the negative terminal tab (7, 8) locates, right adjacent to the respective terminal tab (7, 8);
- the positive and negative terminal tabs (7, 8) are configured to be bent in a folded fashion on top of a surface of the longitudinal shaped fastening portion (1); wherein
- the fastening portion (1) is configured to hinder movement of the battery cells in an orthogonal direction compared to the longest dimension of the fastening portion (1); and wherein
- a desired number of battery cells are configured to be placed adjacently within the battery module so that respective fastening portions (1) aligned in a parallel direction create support for the battery module, with a maximized energy density per volume provided for the battery module.

The present invention discloses, in its second aspect, a manufacturing method for a battery module, comprising the following steps of:
- stacking and/or piling a plurality of battery cells next to each other in a horizontal direction, which battery cells are in a form of pouch cells, wherein each battery cell comprising a positive terminal tab (7) and a negative terminal tab (8) extruding from opposite edges of the battery cell, or from a same edge of the battery cell.

This (i.e. the first) manufacturing method is characterized in that
- inserting a fastening portion (1) per one battery cell, which fastening portion (1) is a longitudinally shaped element, and where the fastening portion (1) is placed along the edge of the battery cell where the positive or the negative terminal tab (7, 8) locates, right adjacent to the respective terminal tab (7, 8),
- bending the positive and negative terminal tabs (7, 8) in a folded fashion on top of a surface of the longitudinal shaped fastening portion (1),
- making required connections between desired terminal tabs (7, 8) and the fastening portions (1),
- building battery cells in several rows and layers if desired, where a single fastening portion (1) may also extend over several rows of battery cells horizontally, and
- placing the inter-connected battery module within an outer housing (11).

The present invention discloses, in its third aspect, a manufacturing method for a battery module, comprising the following steps of:
- stacking and/or piling a plurality of battery cells next to each other in a horizontal direction, which battery cells are in a form of pouch cells, wherein each battery cell comprising a positive terminal tab (7) and a negative terminal tab (8) extruding from opposite edges of the battery cell, or from a same edge of the battery cell.

This (i.e. the second) manufacturing method is characterized in that
- bending the positive and negative terminal tabs (7, 8) in a folded fashion, so that there is free vertical space between the horizontally bent terminal tab (7, 8) and a top edge of the battery cell,
- inserting a fastening portion (1) per one battery cell with a horizontal movement into the free vertical space, which fastening portion (1) is longitudinally shaped, so that the horizontally bent terminal tabs (7, 8) locate right above a top surface of the fastening portion (1),
- making required connections between desired terminal tabs (7, 8) and the fastening portions (1),
- building battery cells in several rows and layers if desired, where a single fastening portion (1) may also extend over several rows of battery cells horizontally, and
- placing the inter-connected battery module within an outer housing (11).

Several different embodiments are disclosed in dependent claims, and in the detailed description below.

### Brief description of the drawings

FIG. 1 illustrates a single battery cell applicable in the present invention, with certain relevant dimensional parameters shown,
FIG. 2 illustrates a structure between two adjacent battery modules according to an example of the present invention, introducing a fastening portion,
FIG. 3 illustrates a cross-sectional view from the edge of the battery cell, showing a possible bending principle for the positive and negative terminal tabs,
FIG. 4 illustrates an assembly method for a battery module, showing possible connection tools and a housing shape as examples of the present invention,
FIG. 5 illustrates a closed battery module in a finished rectangularly shaped box, and
FIG. 6 illustrates the closed battery module in a finished rectangularly shaped box as a direct side-view, and as an inner cross-section along the direction of a plane of a battery cell within the battery module.

### Detailed description

The present invention wich is disclosed in the claims, introduces an efficient packaging method of battery cells which are in the form of pouch cells. In the context of the present invention, a number of battery cells can be grouped and connected in a desired manner to form a battery module. The battery module itself forms a main part of the present invention. The inventive idea also comprises an aspect where a larger battery module is built, comprising at least two battery cell rows and/or layers placed in a desired, scalable arrangement. In its simplest form, the battery module according to the present invention comprises a single group (= row) of adjacent, parallel battery cells (i.e. pouch cells), together with a structure and elements discussed further in the following. This group of battery cells is placed in a horizontal direction, where a single pouch cell's plane locates in a vertical direction. This group of cells is tightly stacked together in the horizontal direction for avoiding spare volumes within the battery module. In this way also the terminals will locate on the top edge, or in some embodiments, also in the bottom edge of the pouch cells. A battery pack can be said to comprise at least two layers of battery modules in the Y direction. However, we can also define that any number of layers can be implemented for a battery module; the size of the adjacent battery cell group rows in X direction, and the number of layers in Y direction may just vary. It is notable that a single layer of grouped battery cells according to the invention may be provided with some further mechanical parts or layers, and electronics as well, on top of it. These added mechanical parts, components, and wirings can locate on some other outer surface of the battery module as well. Therefore, the one- or plurality-layered battery module may comprise also these mechanical parts and electronics (not shown in the Figures). However, in the sense of the present invention, we concentrate on optimizing the energy density by using folded terminal tabs and a fastening portion in appropriate locations within the battery module.

The main goal of the present invention is to present a structural concept for a battery module comprised of pouch cells, where certain dimensional optimization criteria are met for optimizing effective energy density in view of the space required by the whole battery module. Such "volumetric efficiency" is highly beneficial for various battery use scenarios e.g. within electric cars, electric sleds i.e. snowmobiles and other electric vehicles, machinery and devices, for instance.

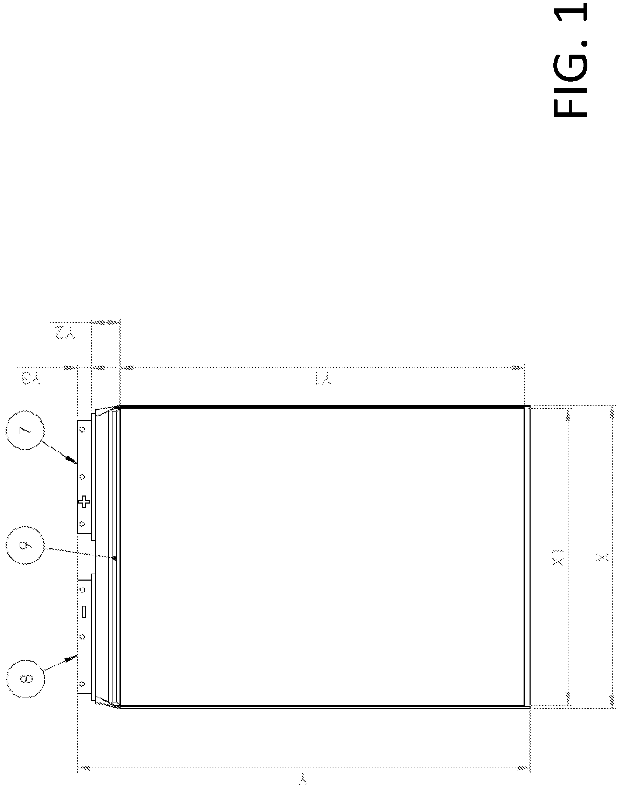

We next refer to the embodiments of the present invention shown in Figures 1-6.

FIG. 1 illustrates a single battery cell applicable in the present invention, with certain relevant dimensional parameters shown. The view is directly towards a large planar surface of a pouch cell -typed battery cell. The shape of a shown battery element, i.e. the dimensional ratio between the height and the width of the battery cell, is merely exemplary. FIG. 1 shows a planar, relatively thin, battery cell which comprises two "extruded" physical parts sticking out of the cell, namely a positive terminal tab 7 and a negative terminal tab 8. In this embodiment, the terminal tabs 7, 8 locate on a same edge of the rectangular battery cell but it is alternatively well possible that a first terminal tab locates on an opposite edge of the battery cell than a second terminal tab. The present invention is applicable to both of these situations.

A pocket for gases 9 locates right at the top of the main body of the effective volume comprising electrodes in a stacked or rolled form. Thus, the pocket for gases 9 also locates right adjacent to the extruded terminal tabs 7, 8. The pocket of gases 9 is a spare volume right beside the battery cell, which enables gases created within the battery cell to gather without breaking the battery cell structure through excessive pressure.

FIG. 1 also shows some dimensional parameters of a single battery cell, namely:
- cell width X1 of the battery cell, without outer housing
- total width X, with the outer housing
- cell height Y1
- height of supporting flange Y2
- height of the terminal tabs Y3 connected to the top of the supporting flange
- total height Y of the battery module in case the terminal tabs are not bent, the total height Y consisting Y1, Y2 and Y3 together with the bottom housing thickness (in case no gaps / spare room is left internally within the structure).

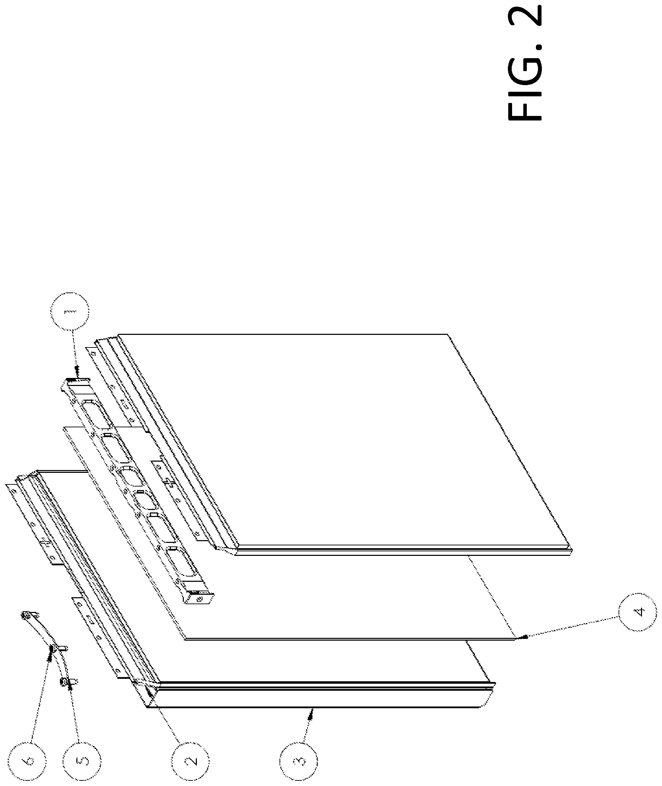

Now proceeding to some of the key elements in the present invention, FIG. 2 illustrates a structure between two adjacent battery cells according to an example of the present invention, introducing a fastening portion 1. Two adjacent battery cells are shown, shaped as rectangular and thin pieces aligned in a vertical direction. On the top edge of the battery cell, there are a positive terminal tab and a negative terminal tab connected to a vertically shaped flange 2 along the top edge. The flange thus works as an intermediate piece between the electrodes in the pouch cell and the extruded terminal tabs. In this embodiment, the right hand side battery cell is flipped compared to the left hand side battery cell so that the negative and the positive terminal tabs are in opposite order between the two cells (as seen in the Figure). Thus, the positions of the positive and negative terminal tabs change in an alternating fashion when looking an arranged (i.e. stacked) group of the battery cells from the first element to the last element in the battery module, in this embodiment.

Other planar (i.e. layer-like) elements within the battery module are a compression pad 4 (e.g. a layer made of cellular rubber, which can be a relatively thin piece of cellular rubber) and a thermally conductive fin 3, in the embodiment shown in FIG. 2. Additionally, there can be an electrically insulating layer or film between the battery cell and the thermal fin 3. For the first mentioned element, a compression pad 4 can be placed between each planar, adjacent surfaces of adjacent battery cells, enabling uniform compression pressure between the battery cells. In an alternative solution, the compression pad 4 may be made of some other elastic material instead, enabling smoothening of the forces applied to the surface of this material. For the second mentioned element, the thermally conductive fin 3 can be made of metal, like e.g. aluminium, or of graphite, and the thermally conductive fin 3 can be placed in selected gaps between adjacent battery cells, improving thermal energy transfer within the battery module. In other words, the thermally conductive fin 3 may locate in each of the gaps between adjacent battery cells, or only in some, i.e. selected ones, of them. The material of the fin 3 itself can in principle be any material which conducts heat well, so thus, the thermally conductive fin 3 can be called as "thermally conductive material" as well. The main purpose is to offer proper and sufficient paths for the emerging excessive heat, due to the chemical reactions in the battery cells, to be transferred outside of the battery module. The thermally conductive fins 3 will smoothen the possible thermal energy peaks within some parts of the battery module by moving the excessive heat to cooler areas within the battery module, and eventually, to the outer housing of the battery module and to the ambient environment around the battery module.

The thermally conductive fin 3 may thus be made of metal, which has good thermal conductivity, and which is also well load-bearing structurally. Such a metal may be selected to be aluminium (as mentioned above), but other metals may also be selected if desired.

Proceeding to other components, the structure shown in FIG. 2 illustrates a horizontally aligned, longitudinal piece, i.e. a fastening portion 1. It is designed to fit each gap between adjacent top edges of the battery cells, beside (i.e. between) the flanges 2 of two consecutive battery cells. The fastening portion 1 may be manufactured from electrically insulating material, such as plastic. In an embodiment, the fastening portion 1 comprises screw holes allowing connections of metal-fabricated terminal tabs 7, 8 on top of the fastening portion 1. Furthermore, the fastening portion 1 may comprise screw holes on its end surfaces in order to enable connections with the outer housing of the battery module from the outside. Furthermore, in an embodiment, the fastening portion 1 may comprise hollow sections in its design (an example is shown; other hollow designs are possible as well) for lightening the volumetric density, and thus, the weight of the fastening portion 1. Yet in another embodiment, the fastening portion may be manufactured from an electrically conductive material, such as metal, but it is finally coated with electrically insulating material, such as plastic or other hard polymer.

Also shown in FIG. 2, there are connecting means (i.e. connectors) enabling connections between aligned terminal tabs of two consecutive battery cells, and also for connecting these terminal tabs to the rigidifying fastening portion 1. In this example, the connecting means are formed by a mechanically attached clamp joint 5, 6, which can be applied to terminal tabs 7, 8; once they have been folded i.e. bent 90 degrees to form a horizontal tab section. The clamp joint 5, 6 applies spring force to the applied section of the terminal tab 7, 8 which enhances the electrical connection there. Through bending of the extruded portions of the terminal tabs, the inner volume of the battery module will be well spared which means that the efficient battery volume (where the electrochemical reactions take place) will form a bigger portion among the whole volume of the battery module (defined by its outer "walls" i.e. the outer housing). This is a crucial thing in optimizing the energy density of the battery module, as we have discussed earlier, and it is especially relevant in vehicular battery assemblies.

In yet another embodiment, the connection is not a clamp joint, but rather a joint created by a laser welding method, or a joint created by an electromagnetic pulse. Furthermore, resistance welding, or soldering, or glueing are also possible methods in some other embodiments of the invention. In yet another embodiment, the connection method can be ultrasonic welding, which indeed requires a rigid counter-part element underneath the connected terminal tabs 7, 8. The required counter-part element can be temporarily inserted for this role in an intermediate space after the terminal tabs 7, 8 have been bent 90 degrees, and folded on top of one another. The counter-part element thus supports the ultrasonic welding action right below the folded terminal tabs 7, 8. Then the counter-part element can be removed and the fastening portion 1 can thereafter be inserted horizontally in this intermediate space, so that folded and connected terminal tabs 7, 8 will be settled right on top of the upper surface of the fastening portion 1.

FIG. 3 illustrates a cross-sectional view from the edge of the battery cell, showing a possible bending principle for the positive and negative terminal tabs. The highlighted part A shows the top area of the battery cell with the flange where the terminal tabs are unbent. Instead, the highlighted part B shows the same part where a first terminal tab has been bent leftwards and a second terminal tab has been bent rightwards. The bending angle is 90 degrees, so that the ends of the tabs will be aligned on a horizontal plane, if the battery cell plane itself locates on a vertical plane. FIG. 3 also shows that the height of the bendable section of the terminal tabs is Y3 (see the leftmost sub-image). On the other hand, after the bending of the terminal tabs, the defined height (or maximum height) for the fastening portion 1 is Y2 (see the rightmost sub-image). Thus, as a conclusion obtained by the bending action, the spared height of the whole system will decrease by Y3 with every vertical cell in the Y direction, when comparing situation B to A. Thus, subsequent components in the Y direction can be placed Y3 closer to the battery cells, thus increasing the energy density of the whole battery module.

In an embodiment, the height (= vertical "thickness" of the horizontally placed longitudinal element) of the fastening portion 1 is equal to Y2, according to the notation of FIG. 3.

FIG. 4 illustrates an assembly method for a battery module, showing possible connection tools and a housing shape as examples of the present invention. The battery module is placed within a solid support structure 11 (i.e. outer housing 11) shown here as a U-shaped element underneath the other elements. The solid support structure (or the outer housing) 11 can be made of metal, which has good thermal conductivity properties, and is also well load-bearing structurally. Such a metal can be selected to be aluminium, but other metals can also be selected if desired. Other elements correspond to the earlier discussed parts so that fastening portions 1 locate on top of each battery cell. Flanges 2 are the top parts of each battery cell which separate the adjacent fastening portions 1. Layers acting as compression pads 4 (made of e.g. cellular rubber) are placed between each two adjacent battery cells, in this embodiment. Furthermore, thermally conductive fins 3 made of e.g. aluminium are placed between the battery cells (between every cell pair, or in just some selected ones of them), or alternatively, a metal housing (made of e.g. aluminium) or several metal housings are placed around one or more battery cells. The main purpose is to provide the structure with thermally conductive fins 3 which act as efficient thermal conductors for the excessive heat created in the chemical battery reactions. Fins 3 can also be called as thermal conductors across the structure, which are e.g. made of aluminium or other good conductors for the thermal energy (i.e. metals in general).

Connections in the top surface of the module for the terminal tabs and the fastening portions 1 can be made by a clamp joint 5, 6 or some other connection means which makes the same effect. This type of connection has been discussed in connection with FIG. 2 above.

Finally, for securing the battery module into a fixed and rigid structure, the solid support structure 11 can be connected to the fastening portions 1 via screws 12. This secures the battery module and the battery cells in the X-direction, so that no inner part may move in relation to an adjacent element within the support structure 11, even when external forces or vibrations occur. The support structure 11 can also be called as an outer housing of the battery module.

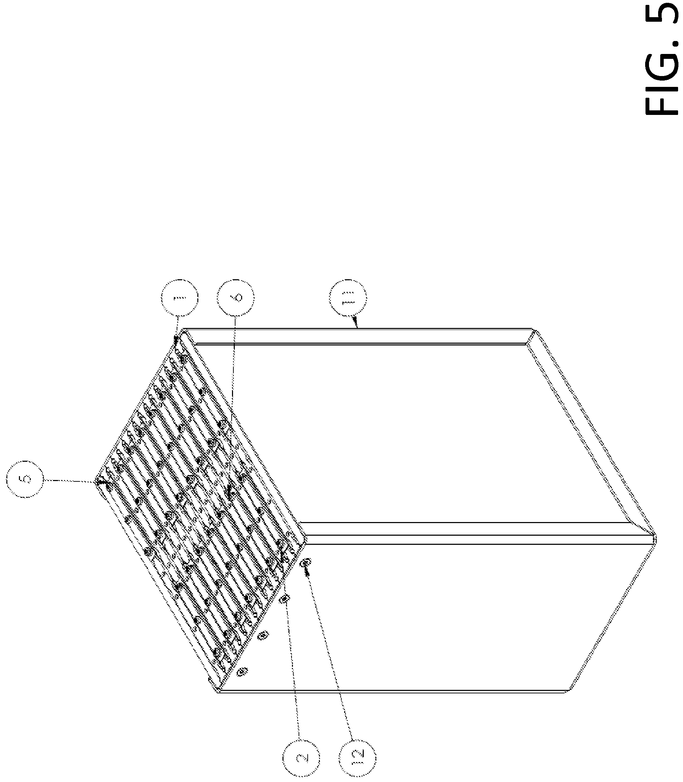

FIG. 5 illustrates a closed battery module in a finished rectangularly shaped box. The box comprises the outer housing 11, which may have an aluminium (or generally metal) plate facing the front. The end wall aluminium (or metal) plate can be the same element as the thermally conductive fin 3 described earlier. The outer housing 11 is connected to the fastening portions 1 by screws 12. The top surface shows fastening portions 1 partly, as they are topped by the bent terminal tabs and connecting means 5, 6 as the topmost elements. The top edges of the flanges 2 of each battery cell are right below the bent terminal tabs. The end product is a volume-effective package which is also rigid and properly interconnected with the screws 12 and connecting means 5, 6. The metal outer walls of the outer housing 11 and the front metal plate act as surfaces from where the excessive internal heat energy will propagate to the surroundings of the battery module.

Although FIG. 5 shows an embodiment, where all the terminal tabs are located on the top surface of the battery module, it is also possible to apply battery cells, which comprise their terminals in an alternative arrangement, such as in opposite sides within a single battery cell. In such an embodiment, some terminal tabs are facing downwards, and the other terminal tabs are facing upwards. In the previous embodiment, there are two opposite surfaces of the battery module (top surface and bottom surface) which will require connection means such as elements (clamp joint) 5, 6 exemplify in FIG. 2, 4 and 5. The connection means can be placed in a transverse direction over the direction of the edges of the battery cells in a desired pattern so that the connection means can be used to connect more sparsely locating terminal tabs after the bending. Serial connection of the battery cells can thus be achieved in a desired pattern. Furthermore, the transverse direction of the connecting means over the direction of the edges of the battery cells can also be applied in the situation of FIG. 5, where the terminal tabs all locate along a single surface of the assembled battery module. Thus, a more complex pattern of sequential series connection of the battery cells within the module can be obtained, if it is needed for some reason. Such a reason would be achieving the locations of the end terminals within the whole battery module in desired locations along the outer surfaces (e.g. somewhere in the middle part along the outer plates), which would serve the connections from the battery module to the rest of the system better.

The above connection principles also apply to embodiments where a single pouch cell has terminal tabs in opposite sides of the pouch cell, i.e. a positive one on the top side of the cell, and a negative one on the bottom side of the cell.

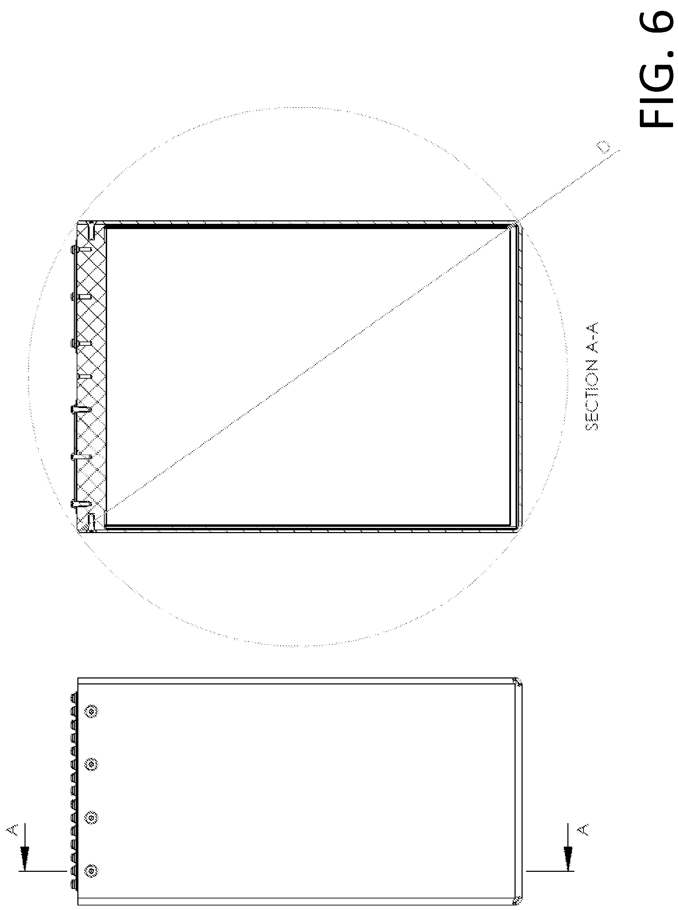

Finally, FIG. 6 illustrates the closed battery module in a finished rectangularly shaped box as a direct side-view, and as an inner cross-section along the direction of a plane of a battery cell within the battery module. The cross-section is marked as A-A. An important parameter is the internal diameter of the battery module, D. With the presented parts, and packaging principles and steps disclosed above, the diameter D can be minimized in view of the used battery cell dimensions, which means an energy efficient battery module in its optimized form.

In an embodiment, the assembly of the battery module is performed with a manual or machined screwdriver tool. Possibly also some of the above mentioned welding methods may be used in the connections of the terminal tabs. Some added tool may also be used in assisting the bending action for the terminal tabs by 90 degrees, before or after the corresponding fastening portion is inserted in its place.

In an embodiment, the energy density of the battery module is maximized by bending the terminal tabs in a lowermost possible position in the situation where a respective terminal tab is protruded upwards.

In an embodiment, where the terminal tabs locate on two opposite sides of the battery module, there of course has to be fastening portions 1 along both these sides comprising terminal tabs (below all bent sections of the terminal tabs).

In an embodiment, the two serially connected fastening portions 1 along a line may be connected like two pieces of a jigsaw puzzle, having one or more protrusions and gaps in the end surfaces of the fastening portions, so that the two fastening portions will place and "lock" against each other from the ends of the elements. This ensures a proper connection between the fastening portions, if there are parallel lines of cells within the module, and it also enhances the internal rigidity of the module by attaching the elements better together. In other words, ends of consecutive fastening portions 1 have at least one protrusion and/or at least one indentation so that consecutive fastening portions 1 in two adjacent rows of battery cells are connectable mechanically with one another, for creating a battery module comprising several parallel rows of battery cells, and serially aligned lines of support elements formed by the connected fastening portions 1.

In an embodiment, instead of the serially aligned line of support elements formed by the connected fastening portions 1, a single elongated fastening portion is set across the whole width of the battery module extending along multiple rows of battery cells, wherein the number of the battery cells within a row coincides with a number of the elongated fastening portions 1 placed in parallel within the battery module. This is of course valid in a situation where there are a number of adjacent rows of stacked horizontally aligned battery cell groups, so that the battery module locates on a single horizontal layer. If the battery module comprises several layers of cells extending in the vertical direction, then of course the number or required long fastening portions 1 will increase.

As a summary of the scalability of the built battery module, it may comprise X battery cells within a single horizontal row, Y rows in a horizontal plane, and Z layers concerning the vertical height of the whole module. Thus, the battery module can be built as large as is required, making the connections between the rows and layers according to the size of the created battery module.

In an embodiment, the fastening portions 1 may be manufactured by molding techniques, or by machining techniques, or by both, depending of the materials used there (metal + plastic; or mere plastic). Of course some other manufacturing technique can also be used.

The present invention is applicable in electric vehicles, such as cars, buses, and any other road and off-road vehicle, aircrafts, and marine vehicles requiring electrical energy. Other types of vehicles applicable are e.g. snowmobiles driven by an electric motor, i.e. electric sleds. The present invention is applicable in rechargeable electric energy storage systems as well. Of course there are other possible usage areas as well, such as motorized golf carts, or drivable lawn mowers, for instance. Also, the present invention is usable in any application area (i.e. machine or device) using batteries, and especially, where good energy density batteries are of high interest. In general, the present invention is applicable in any device or application area demanding electric batteries, and especially, where the available space reserved for the batteries is constrained.

The inventive idea also comprises two manufacturing methods for a battery module, where the bending step for the terminal tabs and the insertion step for the fastening portion can be performed in two optional mutual orders. These are disclosed in the summary section in detail.

The advantages of the present invention comprise the following. The battery cells can be packed in a volumetrically efficient assembly, where the spare volume between the battery cells, and in every direction around a specific battery cell can be minimized. In other words, the efficient battery volume where the chemical reactions take place, will be maximized in view of the volume of the outer housing of the battery module. The maximized energy density is obtained by the structure involving bent terminal tabs. Secondly, the battery module structure with a plurality of fastening portions and their connections with the terminal tabs makes the structure more rigid, and also more vibration-tolerant. Also the connections from the side, meaning the connections between the outer housing's top part and the end surfaces of the longitudinal fastening portions, makes the structure more rigid. The presented structure supports the battery cells from all directions within the battery module. Furthermore, the fastening portion creates a proper counter-force, when connecting the bent terminal tabs together from the top side of the battery module. Furthermore, heat conductors (made of e.g. metal plates, such as aluminium plates) enable an efficient thermal passageway for excessive heat, emerging from chemical battery reactions, and conducted towards the outer housing via such heat conducting plates. Finally, the compression pads (e.g. the layers of cellular rubber) smoothen the pressure-based forces on the surfaces of the battery cells themselves. One advantage of the present invention is the lack of any gel-typed binding material within the battery module, which makes life easier when considering the maintenance situations of the battery. Gel-based inner binding material would make it really hard to disconnect the battery cells from one another if needed for some reason. Instead, the connections, thermally conductive fins, and the solid fastening portion of the present invention (among other physical parts) make the battery module easy to be disassembled for the maintenance actions. The only tool needed for the disassembly is a screwdriver (machined or manual). The end result is a battery module or several battery modules, which can be placed in tightly available rectangular spaces within a housing or frame of a vehicle, for instance. The available space (i.e. volume) will thus be efficiently used which is of uttermost importance in electric vehicle design procedures nowadays.

The present invention is not restricted merely to embodiments presented above, but the present invention may vary within the scope of the claims.

## Claims

1. A battery module, comprising:
- a plurality of battery cells, which are in a form of pouch cells, and which are stacked and/or piled next to each other in a horizontal direction;
- each battery cell comprising a positive terminal tab (7) and a negative terminal tab (8) extruding from opposite edges of the battery cell, or from a same edge of the battery cell;
**characterized in that** the battery module further comprises:
- a fastening portion (1) per one battery cell, which fastening portion (1) is a longitudinally shaped element, and where the fastening portion (1) is placed along the edge of the battery cell where the positive or the negative terminal tab (7, 8) locates, right adjacent to the respective terminal tab (7, 8);
- the positive and negative terminal tabs (7, 8) are configured to be in a bent fashion on top of a surface of the longitudinal shaped fastening portion (1); wherein
- the fastening portion (1) is configured to hinder movement of the battery cells in an orthogonal direction compared to the longest dimension of the fastening portion (1); and wherein
- a desired number of battery cells are configured to be placed adjacently within the battery module so that respective fastening portions (1) aligned in a parallel direction create support for the battery module.

2. The battery module according to claim 1, **characterized in that** the battery module further comprises:
- the fastening portion (1), which comprises hollow inner sections, and in the completed battery module, the bent terminal tabs (7, 8) are screwed to or otherwise connected with the fastening portion (1), resulting in a mechanically attached clamp joint (5, 6).

3. The battery module according to claim 1, **characterized in that** a terminal tab (7, 8) from a battery cell is bent on top of a terminal tab (7, 8) of an adjacent battery cell, and connected together and with a fastening portion (1) enabling a serial connection of the battery cells.

4. The battery module according to claim 1, **characterized in that** the positive and negative terminal tabs (7, 8) are configured to be bent as close as possible to a top edge of a flange (2) which flange (2) locates on top of the battery cell.

5. The battery module according to claim 1, **characterized in that** the positive and negative terminal tabs (7, 8) are configured to be bent 90 degrees.

6. The battery module according to claim 1, **characterized in that** the connection between the bent terminal tab (7, 8) and a long edge of the longitudinal fastening portion (1) is a laser welded joint, or a joint performed by an electromagnetic pulse.

7. The battery module according to claim 1, **characterized in that** the bending actions and connections between desired terminal tabs (7, 8)within the battery module are configured to be performed by ultrasonic welding.

8. The battery module according to claim 1, **characterized in that** the battery module comprises an outer housing (11) made of metal, creating outer support structure for the battery module.

9. The battery module according to claim 8, **characterized in that** the ends of the fastening portions (1) are configured to be connected to an outer housing (11) by screws (12).

10. The battery module according to claim 1, **characterized in that** the battery module comprises at least one thermally conductive fin (3), placed in selected gaps between adjacent battery cells, improving thermal energy transfer within the battery module.

11. The battery module according to claim 1, **characterized in that** the battery module comprises a compression pad (4) between each planar, adjacent surfaces of adjacent battery cells, enabling uniform compression pressure between the battery cells within the battery module.

12. The battery module according to claim 1, **characterized in that** ends of consecutive fastening portions (1) have at least one protrusion and/or at least one indentation so that consecutive fastening portions (1) in two adjacent rows of battery cells are connectable mechanically with one another, for creating a battery module comprising several parallel rows of battery cells, and serially aligned lines of support elements formed by the connected fastening portions (1).

13. The battery module according to claim 12, **characterized in that** instead of the serially aligned line of support elements formed by the connected fastening portions (1), a single elongated fastening portion is set across the whole width of the battery module extending along multiple rows of battery cells, wherein the number of the battery cells within a row coincides with a number of the elongated fastening portions (1) placed in parallel within the battery module.

14. A manufacturing method for a battery module, comprising the following steps of:
- stacking and/or piling a plurality of battery cells next to each other in a horizontal direction, which battery cells are in a form of pouch cells, wherein each battery cell comprising a positive terminal tab (7) and a negative terminal tab (8) extruding from opposite edges of the battery cell, or from a same edge of the battery cell,
**characterized in that**
- inserting a fastening portion (1) per one battery cell, which fastening portion (1) is a longitudinally shaped element, and where the fastening portion (1) is placed along the edge of the battery cell where the positive or the negative terminal tab (7, 8) locates, right adjacent to the respective terminal tab (7, 8),
- bending the positive and negative terminal tabs (7, 8) on top of a surface of the longitudinal shaped fastening portion (1),
- making required connections between desired terminal tabs (7, 8) and the fastening portions (1),
- building battery cells in several rows and layers if desired, where a single fastening portion (1) may also extend over several rows of battery cells horizontally, and
- placing the inter-connected battery module within an outer housing (11).

15. A manufacturing method for a battery module, comprising the following steps of:
- stacking and/or piling a plurality of battery cells next to each other in a horizontal direction, which battery cells are in a form of pouch cells, wherein each battery cell comprising a positive terminal tab (7) and a negative terminal tab (8) extruding from opposite edges of the battery cell, or from a same edge of the battery cell,
**characterized in that**
- bending the positive and negative terminal tabs (7, 8), so that there is free vertical space between the horizontally bent terminal tab (7, 8) and a top edge of the battery cell,
- inserting a fastening portion (1) per one battery cell with a horizontal movement into the free vertical space, which fastening portion (1) is longitudinally shaped, so that the horizontally bent terminal tabs (7, 8) locate right above a top surface of the fastening portion (1),
- making required connections between desired terminal tabs (7, 8) and the fastening portions (1),
- building battery cells in several rows and layers if desired, where a single fastening portion (1) may also extend over several rows of battery cells horizontally, and
- placing the inter-connected battery module within an outer housing (11).

## Patentansprüche

1. Batteriemodul, umfassend:
- eine Vielzahl von Batteriezellen, die in Form von Beutelzellen vorliegen und in horizontaler Richtung nebeneinander gestapelt und/oder aufgeschichtet sind;
- wobei jede Batteriezelle eine positive Anschlusslasche (7) und eine negative Anschlusslasche (8) umfasst, die aus gegenüberliegenden Kanten der Batteriezelle oder aus einer gleichen Kante der Batteriezelle herausragen;
**dadurch gekennzeichnet, dass** das Batteriemodul ferner Folgendes umfasst:
- einen Befestigungsabschnitt (1) pro Batteriezelle, wobei der Befestigungsabschnitt (1) ein länglich geformtes Element ist und wobei der Befestigungsabschnitt (1) entlang der Kante der Batteriezelle, wo sich die positive oder die negative Anschlusslasche (7, 8) befindet, direkt neben der jeweiligen Anschlusslasche (7, 8) platziert ist;
- die positiven und negativen Anschlusslaschen (7, 8) so konfiguriert sind, dass sie in gebogener Weise auf einer Oberfläche des länglich geformten Befestigungsabschnitts (1) liegen;
- der Befestigungsabschnitt (1) so konfiguriert ist, dass er eine Bewegung der Batteriezellen in einer orthogonalen Richtung im Vergleich zur längsten Abmessung des Befestigungsabschnitts (1) verhindert; und wobei
- eine gewünschte Anzahl von Batteriezellen so konfiguriert ist, dass sie nebeneinander im Batteriemodul platziert werden, sodass die jeweiligen, in einer parallelen Richtung ausgerichteten Befestigungsabschnitte (1) eine Stütze für das Batteriemodul bilden.

2. Batteriemodul nach Anspruch 1, **dadurch gekennzeichnet, dass** das Batteriemodul weiterhin Folgendes umfasst:
- den Befestigungsabschnitt (1), der hohle Innenabschnitte aufweist, und im fertigen Batteriemodul die gebogenen Anschlusslaschen (7, 8) mit dem Befestigungsabschnitt (1) verschraubt oder anderweitig verbunden sind, wodurch eine mechanisch befestigte Klemmverbindung (5, 6) entsteht.

3. Batteriemodul nach Anspruch 1, **dadurch gekennzeichnet, dass** eine Anschlusslasche (7, 8) einer Batteriezelle auf eine Anschlusslasche (7, 8) einer benachbarten Batteriezelle gebogen und miteinander und mit einem Befestigungsabschnitt (1) verbunden ist, der eine Reihenschaltung der Batteriezellen ermöglicht.

4. Batteriemodul nach Anspruch 1, **dadurch gekennzeichnet, dass** die Plus- und Minuspollaschen (7, 8) so ausgebildet sind, dass sie möglichst nahe an einer Oberkante eines Flansches (2) gebogen sind, welcher Flansch (2) oben auf der Batteriezelle liegt.

5. Batteriemodul nach Anspruch 1, **dadurch gekennzeichnet, dass** die Plus- und Minuspolfahnen (7, 8) um 90 Grad abgewinkelt ausgebildet sind.

6. Batteriemodul nach Anspruch 1, **dadurch gekennzeichnet, dass** die Verbindung zwischen der abgewinkelten Anschlusslasche (7, 8) und einer Längskante des länglichen Befestigungsabschnitts (1) eine Laserschweißverbindung oder eine durch einen elektromagnetischen Impuls ausgeführte Verbindung ist.

7. Batteriemodul nach Anspruch 1, **dadurch gekennzeichnet, dass** die Biegevorgänge und Verbindungen zwischen gewünschten Anschlusslaschen (7, 8) innerhalb des Batteriemoduls durch Ultraschallschweißen ausgeführt werden.

8. Batteriemodul nach Anspruch 1, **dadurch gekennzeichnet, dass** das Batteriemodul ein Außengehäuse (11) aus Metall umfasst, das eine äußere Trägerstruktur für das Batteriemodul bildet.

9. Batteriemodul nach Anspruch 8, **dadurch gekennzeichnet, dass** die Enden der Befestigungsabschnitte (1) dazu ausgebildet sind, mittels Schrauben (12) mit einem Außengehäuse (11) verbunden zu werden.

10. Batteriemodul nach Anspruch 1, **dadurch gekennzeichnet, dass** das Batteriemodul mindestens eine wärmeleitende Lamelle (3) umfasst, die in ausgewählten Lücken zwischen benachbarten Batteriezellen platziert ist und die Wärmeenergieübertragung innerhalb des Batteriemoduls verbessert.

11. Batteriemodul nach Anspruch 1, **dadurch gekennzeichnet, dass** das Batteriemodul zwischen den jeweils ebenen, aneinandergrenzenden Oberflächen benachbarter Batteriezellen ein Kompressionspolster (4) aufweist, das einen gleichmäßigen Kompressionsdruck zwischen den Batteriezellen innerhalb des Batteriemoduls ermöglicht.

12. Batteriemodul nach Anspruch 1, **dadurch gekennzeichnet, dass** die Enden aufeinanderfolgender Befestigungsabschnitte (1) mindestens einen Vorsprung und/oder mindestens eine Vertiefung aufweisen, so dass aufeinanderfolgende Befestigungsabschnitte (1) in zwei benachbarten Reihen von Batteriezellen mechanisch miteinander verbindbar sind, um ein Batteriemodul mit mehreren parallelen Reihen von Batteriezellen und in Reihe ausgerichteten Linien von Stützelementen zu bilden, die durch die verbundenen Befestigungsabschnitte (1) gebildet werden.

13. Batteriemodul nach Anspruch 12, **dadurch gekennzeichnet, dass** anstelle der seriell ausgerichteten Linie von Stützelementen, die durch die verbundenen Befestigungsabschnitte (1) gebildet wird, ein einziger länglicher Befestigungsabschnitt über die gesamte Breite des Batteriemoduls angeordnet ist, der sich entlang mehrerer Reihen von Batteriezellen erstreckt, wobei die Anzahl der Batteriezellen innerhalb einer Reihe mit einer Anzahl der parallel innerhalb des Batteriemoduls angeordneten länglichen Befestigungsabschnitte (1) übereinstimmt.

14. Herstellungsverfahren für ein Batteriemodul, das die folgenden Schritte umfasst:
- Stapeln und/oder Aufschichten einer Vielzahl von Batteriezellen nebeneinander in horizontaler Richtung, wobei die Batteriezellen die Form von Beutelzellen haben, wobei jede Batteriezelle eine positive Anschlusslasche (7) und eine negative Anschlusslasche (8) umfasst, die von gegenüberliegenden Kanten der Batteriezelle oder von einer gleichen Kante der Batteriezelle hervorstehen, **dadurch gekennzeichnet, dass**
- Einsetzen eines Befestigungsabschnitts (1) pro Batteriezelle, wobei der Befestigungsabschnitt (1) ein länglich geformtes Element ist, und wobei der Befestigungsabschnitt (1) entlang der Kante der Batteriezelle, wo sich die positive oder die negative Anschlusslasche (7, 8) befindet, direkt neben der jeweiligen Anschlusslasche (7, 8) platziert wird,
- Biegen der positiven und negativen Anschlusslaschen (7, 8) auf einer Oberfläche des länglich geformten Befestigungsabschnitts (1),
- Herstellen der erforderlichen Verbindungen zwischen den gewünschten Anschlusslaschen (7, 8) und den Befestigungsabschnitten (1),
- Aufbauen von Batteriezellen in mehreren Reihen und Schichten, falls gewünscht, wobei sich ein einzelner Befestigungsabschnitt (1) auch horizontal über mehrere Reihen von Batteriezellen erstrecken kann, und
- Platzieren des miteinander verbundenen Batteriemoduls in einem Außengehäuse (11).

15. Herstellungsverfahren für ein Batteriemodul, das die folgenden Schritte umfasst:
- Stapeln und/oder Aufstapeln einer Vielzahl von Batteriezellen nebeneinander in horizontaler Richtung, wobei die Batteriezellen die Form von Beutelzellen haben, wobei jede Batteriezelle eine positive Anschlusslasche (7) und eine negative Anschlusslasche (8) umfasst, die von gegenüberliegenden Kanten der Batteriezelle oder von einer gleichen Kante der Batteriezelle hervorstehen, **dadurch gekennzeichnet, dass**
- die positiven und negativen Anschlusslaschen (7, 8) gebogen werden, so dass zwischen der horizontal gebogenen Anschlusslasche (7, 8) und einer Oberkante der Batteriezelle ein freier vertikaler Raum vorhanden ist,
- pro Batteriezelle ein Befestigungsabschnitt (1) mit einer horizontalen Bewegung in den freien vertikalen Raum eingeführt wird, wobei der Befestigungsabschnitt (1) längs geformt ist, so dass die horizontal gebogenen Anschlusslaschen (7, 8) direkt über einer Oberseite des Befestigungsabschnitts (1) liegen,
- erforderliche Verbindungen zwischen den gewünschten Anschlusslaschen (7, 8) und den Befestigungsabschnitten (1) hergestellt werden,
- Batteriezellen bei Bedarf in mehreren Reihen und Schichten aufgebaut werden, wobei sich ein einzelner Befestigungsabschnitt (1) auch horizontal über mehrere Reihen von Batteriezellen erstrecken kann, und
- das miteinander verbundene Batteriemodul in einem Außengehäuse (11) platziert wird.

## Revendications

1. Module de batterie, comprenant :
- une pluralité de cellules de batterie, qui se présentent sous la forme de cellules de poche, et qui sont empilées et/ou empilées les unes à côté des autres dans une direction horizontale ;
- chaque cellule de batterie comprenant une languette de borne positive (7) et une languette de borne négative (8) faisant saillie à partir de bords opposés de la cellule de batterie, ou à partir d'un même bord de la cellule de batterie ;
**caractérisé en ce que** le module de batterie comprend en outre :
- une partie de fixation (1) pour chaque cellule de batterie, laquelle partie de fixation (1) est un élément de forme longitudinale, et où la partie de fixation (1) est placée le long du bord de la cellule de batterie où se trouve la languette de borne positive ou négative (7, 8), juste à côté de la languette de borne respective (7, 8) ;
- les languettes de bornes positive et négative (7, 8) sont configurées pour être pliées sur une surface de la partie de fixation de forme longitudinale (1) ; dans lequel
- la partie de fixation (1) est configurée pour entraver le mouvement des cellules de batterie dans une direction orthogonale par rapport à la dimension la plus longue de la partie de fixation (1) ; et dans lequel
- un nombre souhaité de cellules de batterie sont configurées pour être placées de manière adjacente dans le module de batterie de sorte que les parties de fixation respectives (1) alignées dans une direction parallèle créent un support pour le module de batterie.

2. Module de batterie selon la revendication 1, **caractérisé en ce que** le module de batterie comprend en outre :
- la partie de fixation (1), qui comprend des sections intérieures creuses, et dans le module de batterie terminé, les languettes de bornes courbées (7, 8) sont vissées ou autrement reliées à la partie de fixation (1), ce qui donne un joint de serrage fixé mécaniquement (5, 6).

3. Module de batterie selon la revendication 1, **caractérisé en ce qu'**une languette de borne (7, 8) d'une cellule de batterie est pliée sur une languette de borne (7, 8) d'une cellule de batterie adjacente, et reliée ensemble et avec une partie de fixation (1) permettant une connexion en série des cellules de batterie.

4. Module de batterie selon la revendication 1, **caractérisé en ce que** les languettes de bornes positive et négative (7, 8) sont configurées pour être pliées aussi près que possible d'un bord supérieur d'une bride (2) laquelle bride (2) se situe sur le dessus de la cellule de batterie.

5. Module de batterie selon la revendication 1, **caractérisé en ce que** les languettes de bornes positives et négatives (7, 8) sont configurées pour être pliées à 90 degrés.

6. Module de batterie selon la revendication 1, **caractérisé en ce que** la liaison entre la languette terminale pliée (7, 8) et un bord long de la partie de fixation longitudinale (1) est un joint soudé au laser, ou un joint réalisé par une impulsion électromagnétique.

7. Module de batterie selon la revendication 1, **caractérisé en ce que** les actions de pliage et les connexions entre les languettes de borne souhaitées (7, 8) à l'intérieur du module de batterie sont configurées pour être réalisées par soudage par ultrasons.

8. Module de batterie selon la revendication 1, **caractérisé en ce que** le module de batterie comprend un boîtier extérieur (11) en métal, créant une structure de support extérieure pour le module de batterie.

9. Module de batterie selon la revendication 8, **caractérisé en ce que** les extrémités des parties de fixation (1) sont configurées pour être reliées à un boîtier extérieur (11) par des vis (12).

10. Module de batterie selon la revendication 1, **caractérisé en ce que** le module de batterie comprend au moins une ailette thermoconductrice (3), placée dans des espaces sélectionnés entre des cellules de batterie adjacentes, améliorant le transfert d'énergie thermique au sein du module de batterie.

11. Module de batterie selon la revendication 1, **caractérisé en ce que** le module de batterie comprend un tampon de compression (4) entre chaque surface plane et adjacente des cellules de batterie adjacentes, permettant une pression de compression uniforme entre les cellules de batterie à l'intérieur du module de batterie.

12. Module de batterie selon la revendication 1, **caractérisé en ce que** les extrémités des parties de fixation consécutives (1) présentent au moins une saillie et/ou au moins une indentation de sorte que des parties de fixation consécutives (1) dans deux rangées adjacentes de cellules de batterie peuvent être reliées mécaniquement les unes aux autres, pour créer un module de batterie comprenant plusieurs rangées parallèles de cellules de batterie, et des lignes alignées en série d'éléments de support formées par les parties de fixation reliées (1).

13. Module de batterie selon la revendication 12, **caractérisé en ce qu'**au lieu de la ligne alignée en série d'éléments de support formée par les parties de fixation (1) reliées, une seule partie de fixation allongée est disposée sur toute la largeur du module de batterie s'étendant le long de plusieurs rangées de cellules de batterie, dans lequel le nombre de cellules de batterie dans une rangée coïncidant avec un nombre de parties de fixation allongées (1) placées en parallèle dans le module de batterie.

14. Procédé de fabrication d'un module de batterie, comprenant les étapes suivantes :
- l'empilage et/ou la superposition d'une pluralité de cellules de batterie les unes à côté des autres dans une direction horizontale, lesquelles cellules de batterie se présentent sous la forme de cellules en forme de poche, dans lequel chaque cellule de batterie comprenant une languette de borne positive (7) et une languette de borne négative (8) faisant saillie à partir de bords opposés de la cellule de batterie, ou à partir d'un même bord de la cellule de batterie,
**caractérisé en ce que**
- l'insertion d'une partie de fixation (1) pour chaque cellule de batterie, laquelle partie de fixation (1) est un élément de forme longitudinale, et où la partie de fixation (1) est placée le long du bord de la cellule de batterie où se trouve la languette de borne positive ou négative (7, 8), juste à côté de la languette de borne respective (7, 8), le pliage des languettes de borne positive et négative (7, 8) sur le dessus d'une surface de la partie de fixation de forme longitudinale (1),
- la réalisation des connexions requises entre les languettes de bornes souhaitées (7, 8) et les parties de fixation (1),
- la construction des cellules de batterie en plusieurs rangées et couches si on le souhaite, où une seule partie de fixation (1) peut également s'étendre sur plusieurs rangées de cellules de batterie horizontalement, et
- le placement du module de batterie interconnecté dans un boîtier extérieur (11).

15. Procédé de fabrication d'un module de batterie, comprenant les étapes suivantes :
- l'empilage et/ou la superposition d'une pluralité de cellules de batterie les unes à côté des autres dans une direction horizontale, dans lequel chaque cellule de batterie comprenant une languette de borne positive (7) et une languette de borne négative (8) faisant saillie à partir de bords opposés de la cellule de batterie, ou à partir d'un même bord de la cellule de batterie,
**caractérisé en ce que**
- le pliage des languettes des bornes positives et négatives (7, 8), de sorte qu'il y a un espace vertical libre entre la languette de borne pliée horizontalement (7, 8) et un bord supérieur de la cellule de batterie,
- l'insertion d'une partie de fixation (1) par cellule de batterie avec un mouvement horizontal dans l'espace vertical libre, laquelle partie de fixation (1) est formée longitudinalement, de sorte que les languettes de borne pliées horizontalement (7, 8) se trouvent juste au-dessus d'une surface supérieure de la partie de fixation (1),
- la réalisation des connexions requises entre les languettes de bornes souhaitées (7, 8) et les parties de fixation (1),
- la construction des cellules de batterie en plusieurs rangées et couches si on le souhaite, où une seule partie de fixation (1) peut également s'étendre sur plusieurs rangées de cellules de batterie horizontalement, et
- le placement du module de batterie interconnecté dans un boîtier extérieur (11).
